# EUROPEAN PATENT SPECIFICATION

(11) **EP 1 482 735 B1**
(45) Date of publication and mention of the grant of the patent: **08.09.2010**
(21) Application number: 03719089.9
(22) Date of filing: 09.04.2003
(51) Int. Cl.: H04N 7/173, H04N 5/91, H04N 5/76, G06F 17/30, H04N 5/445

(54) **VIDEO CONTENT TRANSMISSION DEVICE AND METHOD, VIDEO CONTENT STORAGE DEVICE, VIDEO CONTENT REPRODUCTION DEVICE AND METHOD, META DATA GENERATION DEVICE, AND VIDEO CONTENT MANAGEMENT METHOD**
VIDEOINHALTÜBERTRAGUNGSEINRICHTUNG UND VERFAHREN, VIDEOINHALTSPEICHEREINRICHTUNG, VIDEOINHALTWIEDERGABEEINRICHTUNG UND VERFAHREN, METADATENERZEUGUNGSEINRICHTUNG UND VIDEOINHALT-VERWALTUNGSVERFAHREN
DISPOSITIF ET PROCEDE DE TRANSMISSION DE CONTENU VIDEO, DISPOSITIF DE STOCKAGE DE CONTENU VIDEO, DISPOSITIF ET PROCEDE DE REPRODUCTION DE CONTENU VIDEO, DISPOSITIF DE GENERATION DE METADONNEES, ET PROCEDE DE GESTION DE CONTENU VIDEO

(30) Priority: 12.04.2002 JP 2002110260
(43) Date of publication of application: 01.12.2004
(73) Proprietor: MITSUBISHI DENKI KABUSHIKI KAISHA, Chiyoda-ku Tokyo 100-8310 (JP)
(72) Inventor: SEKIGUCHI, Shunichi, c/o Mitsubishi Denki K.K., Tokyo 100-8310 (JP); NISHIKAWA, Hirofumi, c/o Mitsubishi Denki K.K., Tokyo 100-8310 (JP); MORIYA, Yoshimi, c/o Mitsubishi Denki Kabushiki K., Tokyo 100-8310 (JP); YAMADA, Yoshihisa, c/o Mitsubishi Denki K. K., Tokyo 100-8310 (JP); OTOI, Kenji, c/o Mitsubishi Denki Kabushiki Kaisha, Tokyo 100-8310 (JP); KURODA, Shinichi, c/o Mitsubishi Denki K. K., Tokyo 100-8310 (JP); OGAWA, Fuminobu, c/o Mitsubishi Denki Kabushiki K., Tokyo 100-8310 (JP); ASAI, Kohtaro, c/o Mitsubishi Denki Kabushiki K., Tokyo 100-8310 (JP)
(74) Representative: Pfenning, Meinig & Partner GbR
(86) International application number: PCT/JP2003/004520
(87) International publication number: WO 2003/088668

(56) References cited:
- EP-A- 0 848 554
- WO-A-02/11446
- JP-A- 2001 167 095
- JP-A- 2001 268 479
- JP-A- 2001 357 008
- JP-A- 2002 084 321
- JP-A- 2002 101 086
- US-A- 5 924 090
- US-A- 5 973 683
- US-A1- 2002 035 726
- US-B1- 6 240 555

## Description

### TECHNICAL FIELD

The present invention relates to a video content sending device and method, a video content storage device, a video content reproduction device and method, a metadata creation device, and a video content management and operation method, which are required for system construction technologies associated with the management, operation and processing of digital video information, in a system based on the exchange of personal digital video information, or in a system collectively managing and operating video contents so as to quickly and properly or accurately present, from among a huge amount of video contents, desired videos on a platform having a variety of reproduction environments mixed with one another.

### BACKGROUND ART

Today, in accordance with the advancement of high-efficiency video compression technologies, digital video information is being actively used in a variety of applications across broadcasting, communications and packages such as digital broadcasting (satellite, terrestrial wave, and cable), DVDs, video CDs, the Internet, mobiles, etc. As a consequence, an enormous amount of digital video contents have been produced and consumed, and it is desired from the view point of effectiveness of information resource sharing in the Internet that these produced video contents be flexibly reusable according to their usage.

Accordingly, services uploading digital images onto servers on the Internet and exchanging image information in limited communities are being started in the background of the spread of digital cameras, the Internet, the speedup and capacity increase of storage devices, and dramatic improvements in computer performance in recent years.

Thus, picture or image takers can effectively reuse one piece of digital image data without spending the time, trouble and cost such as making additional prints. They can instantaneously transmit image information to community members in remote places, or attempt the adaptation of the digital image data to PCs, PDAs and various terminals such as mobile phones, etc., through the conversion of image data sizes or image encoding methods. High-speed and highly convenient information exchange, which would be impossible with physical information exchange through photographs, is now coming to be possible.

When consideration is taken into account to provide a similar service through video information, however, there arise, unlike static or still images, problems such as time-varying, sophisticated or complex contents, a huge data amount, etc.

In addition, from the standpoint of content viewers, there are cases in which they might not be able to view video contents for a long time depending upon circumstances, and hence there is demanded a system that enables viewers to quickly view, from among massive amounts of video contents, only those contents and/or parts thereof which they really want to watch. In such a system, however, there are quite a lot of variations in the content presentation forms, so there also arises another problem that it is not possible to achieve such a system within the framework of existing image exchange services because the information for making a decision as to which of the possible variations should be presented is insufficient.

### DISCLOSURE OF THE INVENTION

Accordingly, the object of the present invention is to provide a video content sending device and method which can present video contents in the forms requested by a viewer in a quick and proper or adequate manner based on the request condition of the viewer such as viewer's tastes or preferences on the video reproduction capability of a certain terminal, the form of contents, etc., as well as to provide a video content reproduction device and method for reproducing such video contents.

In order to solve the above-mentioned problems, the present invention resides in a vide content sending device adapted to receive from a viewer a request containing information specifying a classification of video content the viewer wishes to see and information as to the form in which the video content is to be presented, said device comprising: a metadata creation part adapted to perform analysis processing of video data to create metadata related to said video data so that, when video data constituting video contents is received, signal processing is applied to said received video contents, metadata that describes scene structures of said video contents and a feature quantity concerning a video signal of each individual scene is created, and said video data, which has been subjected to said signal processing, and said created metadata are registered in pairs as video contents in a video content storage device; a content extraction part adapted to extract one or more video contents from storage as presentation candidates on the basis of a comparison of the classification information in the viewer request and the meta data of stored video contents; a content processing part adapted to process the extracted video contents to ensure compliance with the content presentation form specified in the viewer request; and a sending device adapted to transmit an extracted and processed video content to the viewer in accordance with a prescribed protocol.

According to a preferred embodiment of this video content sending device said metadata also includes, at least, a description of outlines of the entire contents of corresponding video data.

According to a further preferred embodiment of this video content sending device said metadata also includes, at least, a description of outlines of the entire contents of corresponding video data, and a description of media attributes thereof; said content extraction part extracts one or more video contents for presentation candidates by matching between the request condition concerning a classification of video contents and the metadata describing the outlines of said entire contents; and said content processing part specifies portions of said video contents to be presented by matching between said request condition concerning forms of video contents and metadata describing said scene structures, and converts the formats of the processed video contents into reproduction media formats specified in the viewer request, by referring to the media formats of said video contents based on the metadata describing said media attributes.

Still further, the present invention resides in a video content sending method adapted to receive from a viewer a request containing information specifying a classification of video content the viewer wishes to see and information as to the form in which the video content is to be presented, said method comprising: performing analysis processing of video data to create metadata related to said video data so that, when video data constituting video contents is received, signal processing is applied to said received video contents, metadata that describes scene structures of said video contents and a feature quantity concerning a video signal of each individual scene is created, and said video data, which has been subjected to said signal processing, and said created metadata are registered in pairs as video contents; extracting one or more video contents from storage as presentation candidates on the basis of a comparison of the classification information in the viewer request and the metadata of stored video contents; processing the extracted video contents to ensure compliance with the content presentation form specified in the viewer request; and transmitting an extracted and processed video content to the viewer in accordance with a prescribed protocol.

Moreover, the present invention resides in a video content reproduction device adapted to request, receive and reproduce video contents comprising video data and metadata related to said video data, comprising: a video content request part that creates a request containing information specifying a classification of video content a viewer wishes to see and information as to the form in which the video content is to be presented; and a video decoding and reproducing part that receives video contents which are processed into presentation forms according to said request, decodes and reproduces video data of said video contents, wherein said video content request part re-creates a video content request based on metadata of said received video contents, which metadata at least describes scene structures of said video contents and a feature quantity concerning a video signal of each individual scene.

In addition, the present invention resides in a video content reproduction method adapted to request, receive and reproduce video contents comprising video data and metadata related to said video data, said method comprising: creating a request containing information specifying a classification of video content a viewer wishes to see and information as to the form in which the video content is to be presented; and receiving video contents which are processed into presentation forms according to said request, decoding and reproducing video data of said video contents; and re-creating a video content request based on metadata of said received video contents, which metadata at least describes scene structures of said video contents and a feature quantity concerning a video signal of each individual scene.

### BRIEF DESCRIPTION OF THE DRAWINGS

Fig. 1 is a view showing the system configuration according to a first embodiment of the present invention.
Fig. 2 is a view showing the system operation procedure according to the first embodiment of the present invention.
Fig. 3 is a view showing the basic structure of metadata accompanying video data in a video content.
Fig. 4 is a view showing the internal configuration of a content delivery server 5 in the first embodiment of the present invention.
Fig. 5 is a view showing the internal configuration of a user terminal 6 according to a second embodiment of the present invention.
Fig. 6 is a view showing the internal configuration of a storage type broadcast receiver according to a third embodiment of the present invention.
Fig. 7 is a view showing the internal configuration of a DVD player provided with a video content operation and management device according to the present invention.
Fig. 8 is a view showing the internal configuration of a receiver which is constructed by adding an external video input section to the storage type broadcast receiver of Fig. 6.

### BEST MODE FOR CARRYING OUT THE INVENTION

Now, preferred embodiments of the present invention will be described below.

### Embodiment 1.

In a first embodiment of the present invention, reference will be made, as an example of a video content management and operation system, to a video exchange server system and its configuration, which collects video contents from video terminals of certain users connected to an IP network and delivers the video contents to other users in the forms of presentation meeting their individual requests.

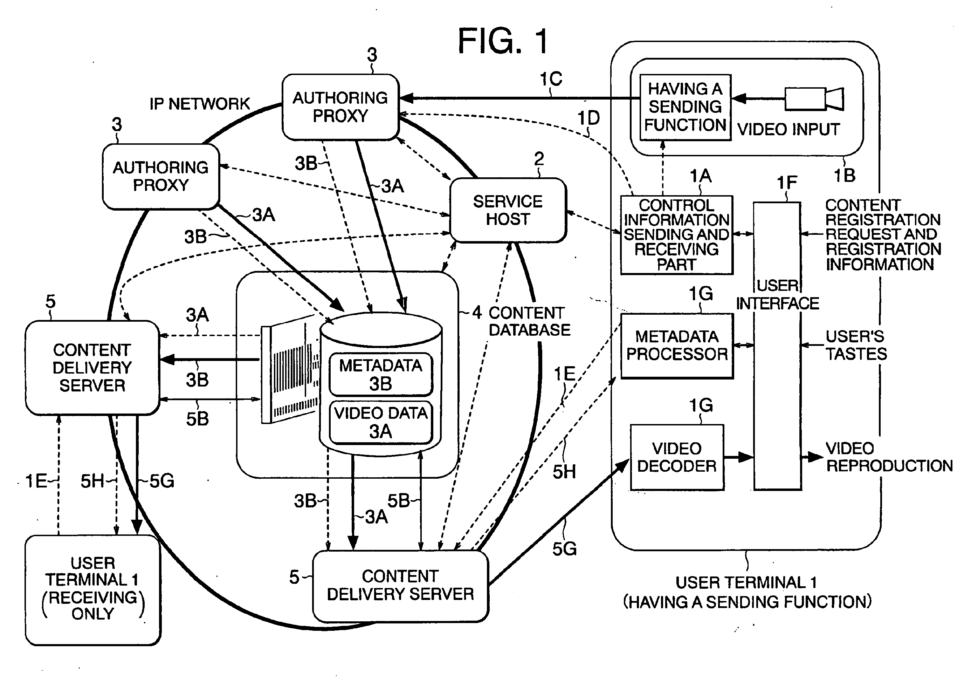

Fig. 1 shows the system configuration of the video content management and operation system according to the present invention. As shown in this figure, the video content management and operation system of the present invention includes user terminals 1 corresponding to video content reproduction devices of the present invention, a service host 2, authoring proxies 3 corresponding to metadata creation devices of the present invention, a content database 4 corresponding to a video content storage device of the present invention, and content delivery servers 5 corresponding to video content sending devices of the present invention, these components being connected with one another through the IP network or the like. Here, note that as shown in Fig. 1, the user terminals 1 include a user terminal, which is equipped with a control information sending and receiving part 1A, a video imaging (picture taking) and sending part 1B, etc., and has the function of sending video data 1C to be registered, and a user terminal with a receiver function alone, which is not equipped with such a control information sending and receiving part 1A, such a video imaging and sending part 1B, etc., and hence has no function of transmitting video data 1C to be registered.

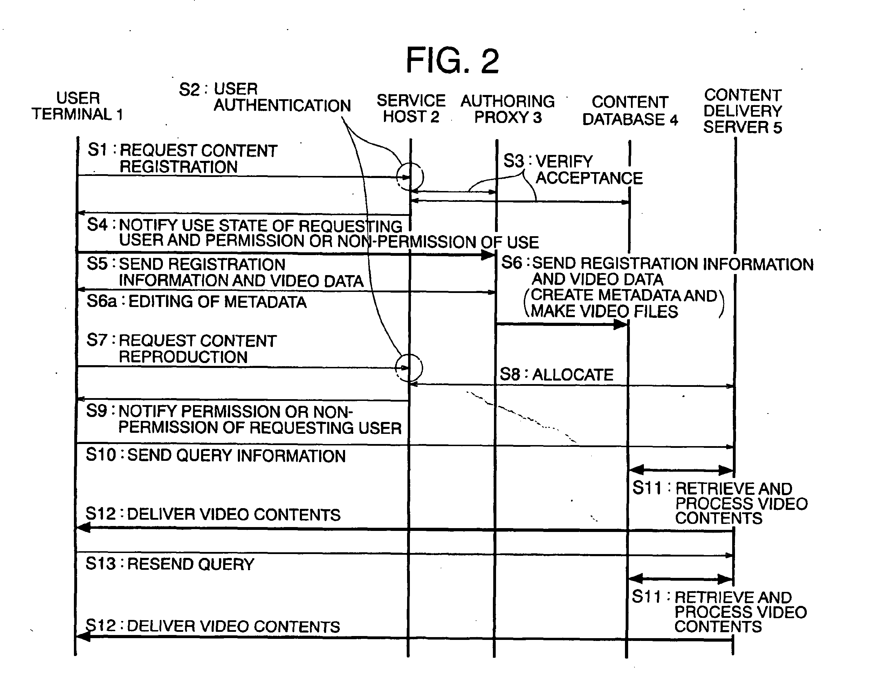

Fig. 2 shows the operational flow of the video content management and operation system of the present invention illustrated in Fig. 1.

The function and operation of the system will be explained separately based on these views while being divided into content registration processing, authoring processing, content delivery processing, and content reproduction and query processing. Here, it is to be understood that in all the following preferred embodiments. video data includes not only data containing only videos (images or pictures) but also audio visual data containing videos and its accompanying audio data.

### CONTENT REGISTRATION PROCESSING

A user terminal 1 having a video sending function consigns the management and operation of video data to this system by uploading thereto and registering therein the video data. The service host 2 takes care of the overall management of this system. The service host 2 performs interaction with the user terminals 1 so that it takes charge of user authentication, and carries out the operation and management of the authoring proxies 3, the content database 4, the content delivery servers 5, etc., which are resources available in the system. Here, note that in Fig. 1, broken lines connected from the service host 1 to the respective resources in the system are hereinafter taken as control lines for the operation and management of the respective resources.

First of all, a user, who wants to register his or her contents, sends a request for content registration from the control information sending and receiving part 1A of a user terminal 1 (hereinafter referred to as the user terminal 1 concerned) to the service host 2 (S1). This request information includes information on whether the user wants the creation of metadata with video analysis in the form of authoring. The service host 2 having received the request authenticates whether the requesting user is a person to be supported by this system (S2). If the authentication is OK, an authoring proxy 3 and the content database 4 available in the system are specified (S3). At the same time, the resource use state of the user who made the request is checked. For instance, it is checked whether the total amount of data of the video contents to be registered by the user concerned exceeds an upper limit. Then, the user terminal 1 concerned is notified of the permission or non-permission of the requested registration as well as an available authoring proxy 3 and an address in the content database 4 in the case of the registration being permitted (S4).

If the permission of the requested registration is verified by the notification from the service host 2, the user terminal 1 concerned having a transmission function transmits or forwards video data 1C to be registered to the available authoring proxy 3 through the video imaging and sending part 1B (S5). Here, the video data 1C can take various data formats depending upon the specification of the user terminal 1 concerned. For example, video data conforming to the MPEG-4 video might be used in the case of a terminal which assumes that an access line to which the video data is sent is a transmission path critical for video transmission, such as a mobile communication line, etc. On the other hand, in the case of a terminal to be connected with an access line that is sufficiently wideband, video data of the DV format and the MPEG-2 format may be used. In addition, regarding transport protocols, a protocol such as RTP/UDP/IP suitable for real-time media is used when real-time registration is needed, whereas when real-time registration is not necessarily needed, the video data 1C can be registered in a reliable manner by using a highly reliable transport protocol such as TCP/IP or the like.

### AUTHORING PROCESSING

In this first embodiment, the authoring proxies 3 are subjected to processing loads such as the image analysis of the video data 1C, the conversion of video data format necessary for registration to the content database 4, etc, and hence they are arranged on the IP network in a decentralized or distributed manner so as to decentralize or distribute the processing load of the entire system, but even the use of only one authoring proxy may of course be possible if it has sufficient capacity. Incidentally, when the user do not want the creation of metadata requiring the processing of analyzing videos or images, a notification is made from the user terminal 1 concerned to the service host 2, instead of the video data 1C to be registered being transmitted to an authoring proxy 3 (S5), so that a video or image analysis in that authoring proxy 3 can be turn off.

When the video data 1C is sent to the authoring proxy 3 concerned so as to create metadata for the video data 1C, the authoring proxy 3 analyzes the video data 1C received (S6). Here, note that analysis processing means that the signal feature of the video data 1C is extracted, and the scene structure of the video and/or a feature quantity in the signal level of each scene are automatically extracted based on the video data feature thus extracted. By describing the scene structure of a video content, it becomes possible to carry out flexible presentation of the video content at the time of the user viewing the video content in such a manner that a part of the video content desired by the viewing user can be reproduced in a summarized manner, or a plurality of parts thereof can be combined with one another so as to be viewed continuously.

Moreover, by describing the video signal feature quantity of each scene, it is possible to improve the efficiency of access in such a manner that a candidate of a scene similar in terms of picture patterns to a certain prescribed scene can be instantaneously found. The extraction of the scene structure of the video can be achieved for example by detecting scene change points based on the continuity of interframe correlation of the video. For the feature extraction at the signal level of each scene, the processing of creating the values of descriptors related, for example, to representative colors, color histogram, the level and distribution of motion, etc., are used.

Further, audio data accompanying the video can be used as auxiliary information for the scene structure extraction depending upon circumstances. In general, it is difficult to completely coincide the result of scene segmentation obtained by the automatic detection of scene change points with the result of scene segmentation which is considered to be appropriate subjectively by a picture taker at the user terminal 1 concerned, and hence it may be constructed such that interaction between the user terminal 1 concerned and the authoring proxy 3 connected thereto is carried out for correction to the automatic scene segmentation result, that is, editing of the metadata (S6a). For instance, this is achieved by exchanging control information between the control information sending and receiving part 1A of the user terminal 1 concerned and the authoring proxy 3 connected thereto. In particular, a system of interaction (S6a) for editing such metadata becomes indispensable for enabling the picture taker of the user terminal 1 concerned to perform processing such as putting a key word to each scene so as to explain the semantic content or meaning of each individual scene.

Furthermore, the user terminal 1 concerned sends information 1D necessary for the content registration to the authoring proxy 3 concurrently with sending the video data 1C. Such information 1D includes a kind of information explicitly input by the user, and another kind of information automatically sent by the terminal 1 concerned. The former kind of information includes the user's name (it can be automatically sent if already registered in the terminal), the title and genre, etc., of each individual video which has been taken by the user. The latter kind of information includes the time and data of picture taking, the place of picture taking (it can be designated by advanced registration in case of a fixed terminal, or automatically registered through the use of appropriate means such as GPS in case of a mobile terminal), or attribute information on media such as the video encoding method, video resolution, frame rate, bit rate, etc., of the video data 1C sent by the terminal.

As a result of the video analysis processing in the authoring proxy 3, video data 3A and metadata 3B are output therefrom.

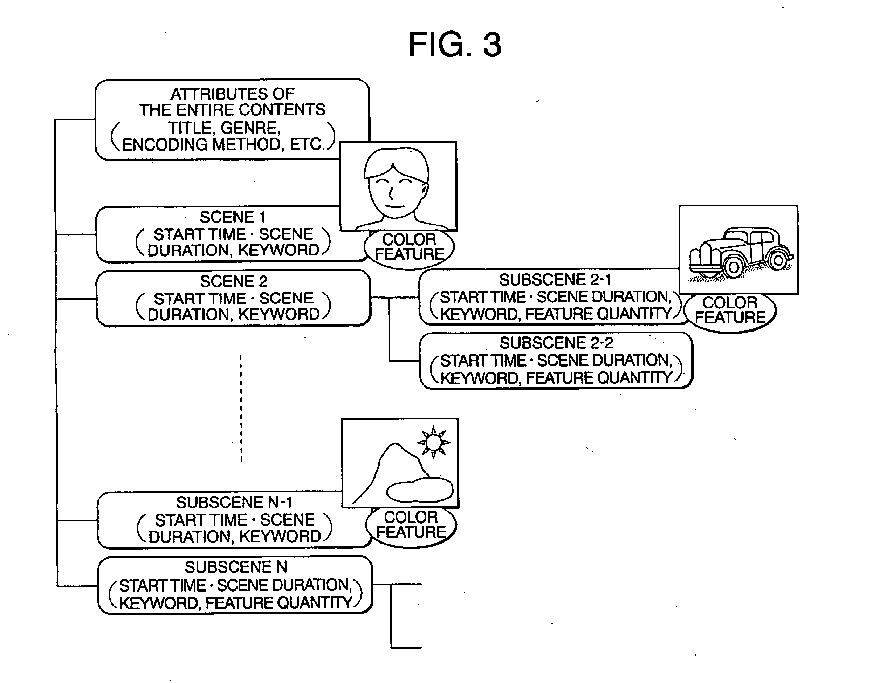

Fig. 3 shows one example of the metadata 3B of the video data 1C created by the authoring proxy 3. The metadata 3B consequentially comprises, as shown in Fig. 3, various elements including the attribute information as the entire content of the video data 1C such as, for example, the video encoding method, resolution, frame rate, URI, content production information, etc., based on the above-mentioned content registration information 1D, as well as the scene structure in the time direction of the video data 1C, key word information given in units of each scene, and feature quantities of the video signal level such as color, motion, etc., obtained as a result of the video or image analysis. These pieces of information are described in a format conforming to MPEG-7, which is a multimedia metadata format of the international standard, and it is assumed that all the authoring proxies 3, which are component elements of this system, describe and output the metadata in the common MPEG-7 metadata format.

As a result, the content database 4 can always receive the metadata 3B in the unified data format from the different authoring proxies 3, and at the same time can unify the processing format of the metadata in the use thereof when video contents are thereafter delivered, so that the entire system and individual devices constituting the system component elements can be reduced in their costs. Here, note that since the video data 3A, though basically equivalent to the video data 1C, are temporarily accumulated or stored in the authoring proxies 3 for their authoring processing and registered in the content database 4 in a file format, they are given numbers different from those of the video data 1C. In addition, the video data 1C may sometimes be converted into the video format types designated by the content database 4.

Hereinafter, each pair of video data 3A and metadata 3B are called a video content, and data are registered in the content database 4 in units of such pairs (S6). In this first embodiment, the video data 3A and the metadata 3B are handled as independent data files, respectively, and it is assumed that the correlation between the video data 3A and the metadata 3B is achieved by specifying the URI information or the like of the video data 3A in the metadata 3B. However, it may be constructed such that the metadata 3B and the video data 3A may be multiplexed so as to be handled and managed as a single stream or a single file. The content database 4 is one node on the IP network, and in order to manage video contents in an internal storage medium within the content database 4 based on a prescribed management method, the URI of the video data 3A is determined at the stage when positioned in place on the internal storage medium. This URI information can also be constructed such that it is registered in the content database 4 by being added to the metadata 3B at the time of the content being registered into the content database 4. Moreover, though not illustrated in the drawings, it may be constructed such that such URI information is determined based on the interaction between the content database 4 and the authoring proxies 3 in the process of creation of the metadata 3B specified by MPEG-7 in the authoring proxy 3.

### CONTENT DELIVERY PROCESSING

The video contents registered in the content database 4 according to the above-mentioned procedure are delivered to the user terminals 1 by means of the content delivery servers 5 in the view forms desired by users. That is, this system enables users themselves to send video contents to the system while consigning the management thereof to the system, and at the same time to view other video contents, whose management has been similarly consigned to the system by other users, in the forms desired by themselves. Thus, services equivalent to the static image exchange system referred to before as a known example can be constructed for video contents. For example, a user sometimes wants to view the whole of a video content or at other times wants to view a digest of a video content that collects only scenes of a specific favor or interest. In addition, even in cases where a user terminal can not support the reproduction of moving pictures or videos, it is still possible for one to view only representative images (key frames) of wanted scenes in a video content. Selection among these dynamic video content presentation forms is not achieved until matching is made between the metadata associated with video data and the request of a user.

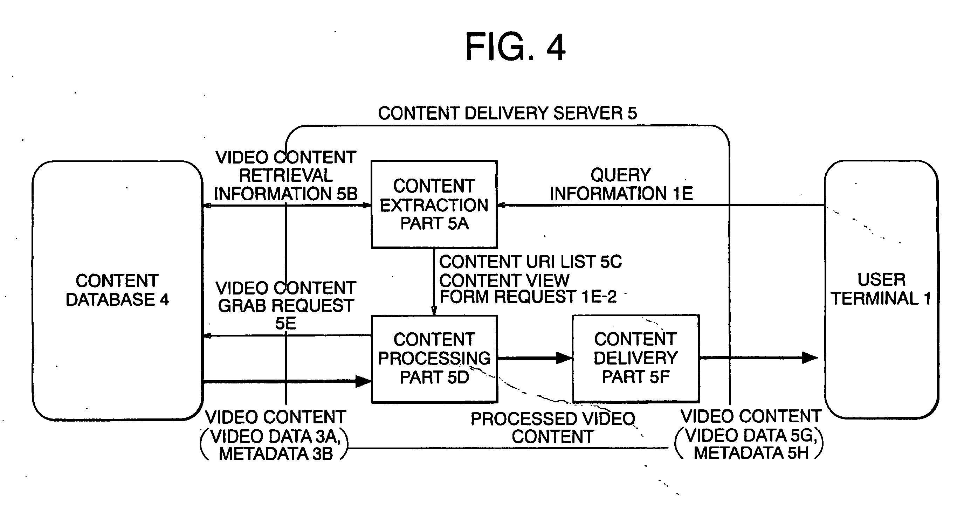

In the flow of Fig. 2, delivery processing is started by a reproduction request from a user terminal 1 in step S7. Similar to the time when video contents are registered, the service host 2 authenticates whether the user who issued the reproduction request is a user to be supported (S2). If the authentication is OK, the most appropriate content delivery server 5 in the system for the delivery of video contents to the requesting user is allocated (S8). The result of such delivery server allocation along with the permission or non-permission of the requested reproduction is notified to the user requesting the reproduction (S9). If it is verified that the system accepted the reproduction request, the user terminal 1 sends query information 1E on the contents to be viewed to the allocated content delivery server 5, as shown in Fig. 4.

Fig. 4 shows the internal configuration of a content delivery server 5, and the relation between that the content delivery server 5, the user terminal 1 and the content database 4.

The query information 1E including, as its component elements, a request condition for reproducing a variety of video contents, is converted into data in a metadata processor 1G, and transmitted from the user terminal 1 to the content delivery server 5 according to a prescribed protocol. Though not illustrated, in general, original data for creation of the query information 1E is sent from the user terminal 1 to the system by the user's making a Web access to the system from the user terminal 1 through its user interface 1F, whereby the query information 1E is sent to the content delivery server 5 based on the original data. Alternatively, in cases where the user has beforehand registered in a video content exchange service provided by this system, it may be constructed such that original data for the creation of the query information 1E is provided through the form of push delivery.

Here, the original data for the creation of the query information 1E is registered in the content database 4 for example, and it may be expressed by list information or the like on the video contents which the user is permitted to view, or a service provider employing this system may present a recommendation menu, or the user may be able to explicitly create a new query in the form of keyboard entry, etc. Based on such information, the user sends, explicitly or automatically, the content requested by himself or herself in the form of the query information 1E.

In addition, the query information 1E includes two kinds of information. One is information on a request condition concerning the classification of the video contents wanted by the user, this being, for example, the information for designating contents of a specific genre. The other is information on a request condition concerning the content presentation forms as to in what forms the user wants to view the contents. The latter information includes a first request condition concerning the tastes or preferences related to the user's view content to be described later, and a second request condition concerning data formats or the like based on constraints on the content reproduction capability which the user terminal itself has as its functional specification. In the following, the former is described as a content classification request 1E-1, and the latter is described as a content view form request 1E-2.

In the content delivery server 5, the content extraction part 5A first inquires the presence or absence of video contents, which belong to the requested classification, to the content database 4 based on the content classification request 1E-1 in the query information 1E. Accordingly, the content delivery server 5 retrieves video contents in the content database 4 (S11), and creates video content retrieval information 5B, whereby the video contents corresponding to the requested classification are listed. Here, it may be constructed such that the content database 4 to which an inquiry is made is not limited to one, but instead such an inquiry can be made to a plurality of content databases 4, if provided. In this case, the content databases 4, being arranged in such a decentralized manner, serve to distribute the load on the entire system due to video content accesses, thereby making it possible to stabilize the system. Moreover, to reduce the frequency of database accesses, the content delivery server 5 may be constructed such that it internally caches a video content list for hits in the past and their classification information. As a result, the enquiry frequency to the databases is decreased, thus making it possible not only to speed up the response to the user but also to reduce the system load.

The video contents listed in the content extraction part 5A are sent to the content processing part 5D in the form of a content URI list 5C along with the content view form request 1E-2.

The content processing part 5D requests, based on the content view form request 1E-2, the whole or parts of the video content needed to be presented according to the requested view form among the video contents of view candidates designated by the URI list 5C to the content database 4 as a video content grab request 5E.

Then, the video contents comprising video data 3A and metadata 3B are first grabbed or taken into the content delivery server 5 from the content database 4 by means of the video content grab request 5E.

The materials of the video contents thus grabbed are processed by the content processing part 5D according to the content view form request 1E-2 (S11). This processing corresponds to the case where the locations or parts of the grabbed video content materials to be reproduced are specified by matching the metadata 3B contained in the video contents with the requested condition information on the user's tastes particularly related to view contents or view forms such as, for instance, "I want to see a digest within three minutes", "videos on which ○○ appears", "information including the spectacle of △△", etc., among the content view form request 1E-2.

The results thereof are reflected on the final view forms through various processing such as, for example, describing locations or parts to be reproduced of the grabbed video contents as multimedia reproduction control description data such as SMIL, subjecting the grabbed video contents to media conversion according to the user's view condition, e.g., converting the representative images including the contents wanted by the user into a group of static images in JPEG format or the like or into other user viewable video encoding schemes, etc.

When the presentation forms of the video contents are determined by the above processing, the video data to be delivered to the user terminal 1 is sent to the content delivery part 5F, so that the processed video contents are delivered to the requested user terminal 1 according to video (or image) media delivery protocols between the content delivery server 5 and the user terminal 1 (S12).

### CONTENT REPRODUCTION AND REQUERY PROCESSING

The video contents delivered to the user terminal 1 according to the above-mentioned procedure comprises video data 5G processed pursuant to the view forms requested by the user, and metadata 5H associated with the video contents to be processed, as shown in Fig. 1 and Fig. 4.

The video data 5G is input to a video decoder 1 G of the user terminal 1 in the data format corresponding to a video encoding method transmitted as the query information 1E to the content delivery server 5, as stated above. The decoded videos or images are reproduced through the user interface 1F. For example, when the video decoder 1G is compliant with the MPEG-4 video coding scheme, the video data 5G is converted in advance in the MPEG-4 video data format and then delivered. In addition, in the case of a user terminal 1 only supporting decoding and displaying JPEG images, the video data 5G is received as key frame image sequence data according to JPEG. In another example, when the user terminal 1 supports synchronized media reproduction compliant with SMIL, the results of video content processing in the content delivery server 5 are further transmitted as SMIL files to the user terminal 1, where the video decoder 1G serves to exchange the video data 5G between the content delivery server 5 and the user terminal 1 according to the SMIL specification.

The metadata 5H is expanded to the user interface 1F in the metadata processor 1G, so that it can be used for information presentation to show what collections of video contents each video content to be delivered is originally composed of. This information can be reused as the information, based on which the query information 1E is originally created. With this information being used as the origin, the query information 1E can be created again and resent, so that video contents can be requested again (S13). With such a mechanism or arrangement, the user is able to receive not only those parts of video contents which are to be actually viewed but also the whole contents thereof as metadata. For example, with respect to a request for retrieving other video contents resembling, in terms of picture patterns, a part of a video content which the user wants to view, a search can be carried out by using, triggers, the signal level feature quantities of video scenes at view locations or parts included in the above-mentioned metadata. Accordingly, it is possible for the user to smoothly execute re-access to all the video contents that can be the objects of user's interest by using, as a starting point, the contents of the videos automatically processed by the system according to the user's request. Though not illustrated in Fig. 1, the system may be configured such that the video data 5G and the metadata 5H are further sent to an authoring proxy 3 where the video data 5G is subjected to video or image analysis processing thereby to revise the metadata 5H and at the same time to register again the video contents thus processed themselves.

Here, note that though stated above, the user terminals 1 need not necessarily have the video uploading function. For example, the system may include, as a system component, a user terminal having only the function of browsing video contents without the provision of the control information sending and receiving part 1A, the video imaging and sending part 1B, etc. Although not described in detail in this first embodiment, it is necessary to perform the management of access rights to the video contents in a satisfactory manner. However, such a security mechanism or arrangement is off the subject of the present invention, and the present invention is predicated on a sufficiently secure video content management and operation system, and provides a technology of improving the convenience thereof.

Therefore, according to the video content management and operation system of this first embodiment, it is possible to achieve a video content management and operation system capable of presenting video contents on a platform having various video reproduction environments mixed with one another in a quick and adequate manner based on the tastes or preferences of viewers related to the video reproduction capabilities of their terminals and the contents of the video contents, which are the request condition at the side of viewing the video contents.

In particular, it is possible to process the video contents dynamically in compliance with a view request by means of a mechanism of managing the video contents in metadata pairs corresponding to video data.

### Embodiment 2 (P2P IP VIDEO EXCHANGE SYSTEM)

Although in the first embodiment, reference has been made to a configuration with the content database 4 and the user terminal 1 separated from each other, a second embodiment of the present invention describes a system configuration in which a user terminal of a user connected to the IP network itself includes a part or all of the functions of the content database 4 and performs video content exchange according to a request of another user.

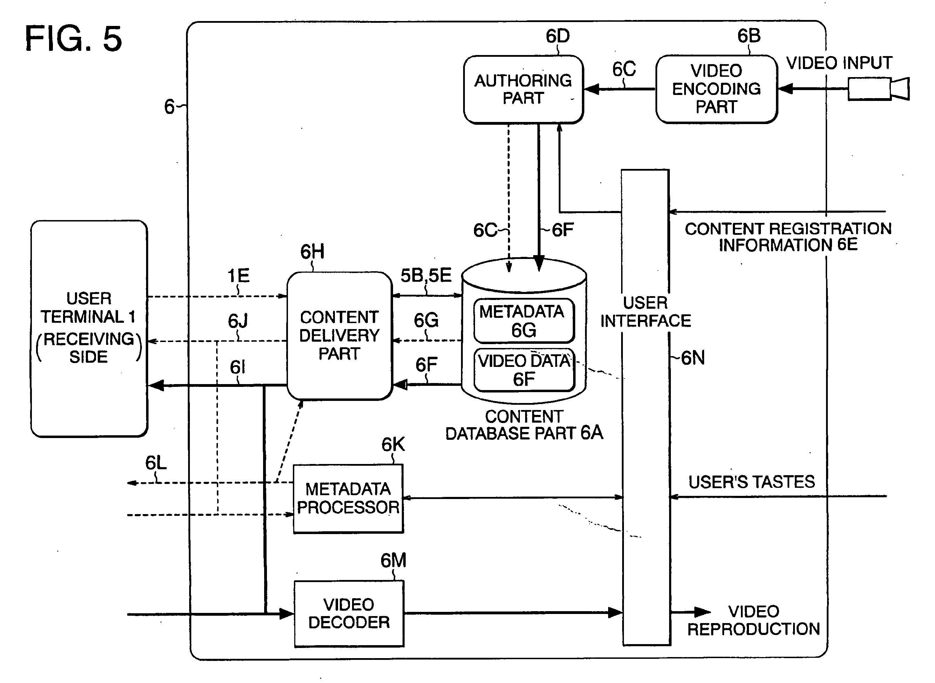

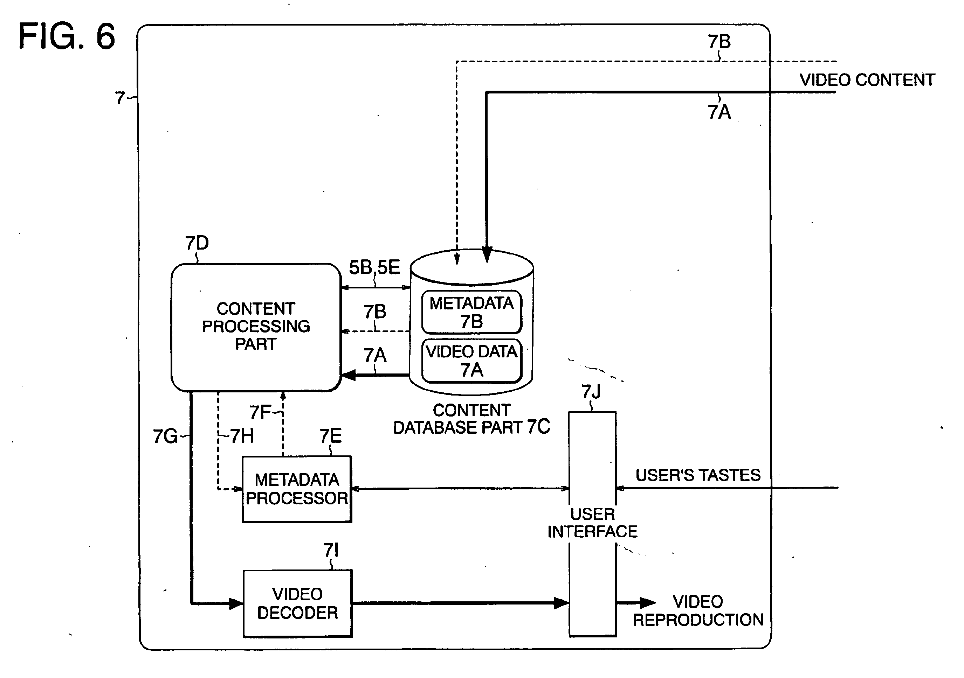

Fig. 5 shows the internal configuration of a user terminal 6 in this second embodiment. In Fig. 5, 6A designates a content database part, 6B a video encoding part, 6d an authoring part, 6H a content delivery part, 6K a metadata processor, 6M a video decoder, and 6N a user interface.

Next, the operation of the user terminal 6 in this second embodiment will be explained below while being divided into content registration processing, authoring processing, content delivery processing, and content reproduction processing.

### CONTENT REGISTRATION PROCESSING

First of all, the user terminal 6 performs the management of video data by registering the video data in the internal content database part 6A. First, an input video is converted into video data 6C to be accumulated or stored in the content database part 6A through the video encoding part 6B, and then forwarded to the authoring part 6D.

### AUTHORING PROCESSING

The authoring part 6D performs the video analysis processing of the video data 6C, and creates metadata for the video data 6C. Here, note that the analysis processing is equivalent in its content to that described in the first embodiment, and hence an explanation thereof is omitted herein. The metadata is created by integrating the result of the video analysis processing and content registration information 6E. The content registration information 6E includes a kind of information explicitly input by the user, and another kind of information automatically inserted by the terminal. The former kind of information includes the user's name (it can be automatically sent if registered in the terminal), the title and genre, etc., of each individual video which has been taken by the user. The latter kind of information includes the time and data of picture taking, the place of picture taking (it can be designated by advanced registration in case of a fixed terminal, or automatically registered through the use of appropriate means such as GPS in case of a mobile terminal), or attribute information on media such as the video encoding method, video resolution, frame rate, bit rate, etc., of the video data 1C sent by the terminal.

As a result of the video analysis processing in the authoring part 6D, video data 6F and metadata 6G are output therefrom. The metadata 6G consequentially comprises various elements such as the attribute information of the entire contents of the video data 6C such as, for example, the video encoding method, resolution, frame rate, URI, content production information, etc., based on the above-mentioned content registration information 1D, as well as the scene structure in the time direction of the video data 6C, key word information given in units of each scene, and feature quantities of the video signal level such as color, motion, etc., obtained as a result of the video or image analysis. These pieces of information are described in a format conforming to MPEG-7, which is a multimedia metadata format of the international standard, as illustrated in Fig. 3.

Here, each pair of video data 6F and metadata 6G are called a video content, and data are registered in the content database 6A in units of such pairs. In this second embodiment, the video data 6F and the metadata 6G are handled as independent data files, respectively, and it is assumed that the correlation between the video data 6F and the metadata 6G is achieved by specifying the URI information or the like of the video data 6F in the metadata 6G. However, it may be constructed such that the metadata 6G and the video data 6F may be multiplexed so as to be handled and managed as a single stream or a single file.

Moreover, the user terminal 6 is one node on the IP network, and in order to manage video contents in an internal storage medium within the content database 6A based on a prescribed management method, the URI of the video data 6F is determined at the stage when positioned in place on the internal storage medium. This URI information can also be constructed such that it is registered in the content database 6A by being added to the metadata 6G at the time of the content being registered into the content database 6A.

### CONTENT DELIVERY PROCESSING

The video contents registered in the content database part 6A in the user terminal 6 according to the above procedure are delivered to another user terminal accessed by the content delivery part 6H according to the access and view request condition from the outside. That is, with user terminals in this second embodiment, the user himself or herself accumulates or stores video contents in the terminal 6, manages them, and delivers the managed video contents based on a request from another user terminal.

Further, the user requesting the delivery of a video content can request a user's desired view form to that user terminal 6, as in the case of making a request to the content delivery server 5 of the first embodiment. Thus, a service equivalent to the static image exchange system referred to before as a known example can be constructed as a peer to peer system for video contents. For example, it is considered that the user terminal 6 is in the form of a digital video camera capable of installing thereon an external mass storage medium for storing the results of videos or pictures taken. In addition, by the provision of a mechanism for responding to a delivery request, like the content delivery part 6H, video information can be freely exchanged among individual users. A user sometimes wants to view the whole of a video content or at other times wants to view a digest of a video content that collects only scenes of a specific favor or interest. Further, even in cases where a user terminal can not support the reproduction of moving pictures or videos, it is still possible for one to view only representative images (key frames) of wanted scenes in a video content. Selection among these dynamic video content presentation forms is achieved by matching between the metadata associated with video data and the request of a user.

The internal configuration of the content delivery part 6H is similar to the configuration of the content delivery server 5 of the first embodiment as shown in Fig. 4. However, it is necessary to read the interaction thereof with the content database 4 in a different way, so that it is replaced by an internal interaction thereof with the content database part 6A. The content delivery part 6H specifies contents for view candidates from the content database part 6A based on the query information 1E from another user terminal 1 requesting a content, and delivers them as video data 6I and metadata 6J after processing them into the view forms requested by the query information 1E.

In this manner, as stated in the first embodiment, too, the user terminal having received the content delivery can re-create query information based on the metadata 6J, thus making a request for contents again.

### CONTENT REPRODUCTION PROCESSING

By the provision of the metadata processor 6K and the video decoder 6M, the user terminal 6 can process the video contents stored in the internal content database part 6A in a various manner to enable the user to view them, and at the same time it can request content delivery to another user terminal. Moreover, the user terminal 6 can receive video data and metadata by requesting a video content to the content database part 6A or other user terminals based on query information 6L.

Therefore, according to this second embodiment, since the user terminal 6 has a function equivalent to the content delivery server 5 and the content database 4 of the first embodiment, it is possible to achieve flexible video content exchanges between a plurality of user terminals possessing video contents without depending upon a conventional client-server model.

### Embodiment 3. (HOME SERVER MODEL)

A third embodiment of the present invention refers, by way of example, to a storage type broadcasting compliant receiver as a case of a video content management and operation system, and describes the configuration thereof. In this third embodiment, assuming the case where metadata in a format common to the MPEG-7 metadata described in the first and second embodiments is given to video contents for broadcasting, a device configuration is provided which is capable of storing the broadcasting video contents in a receiver, and presenting, from among the broadcasting video contents thus stored in the receiver, the video contents wanted by a user in a quick and adequate manner according to various reproduction conditions.

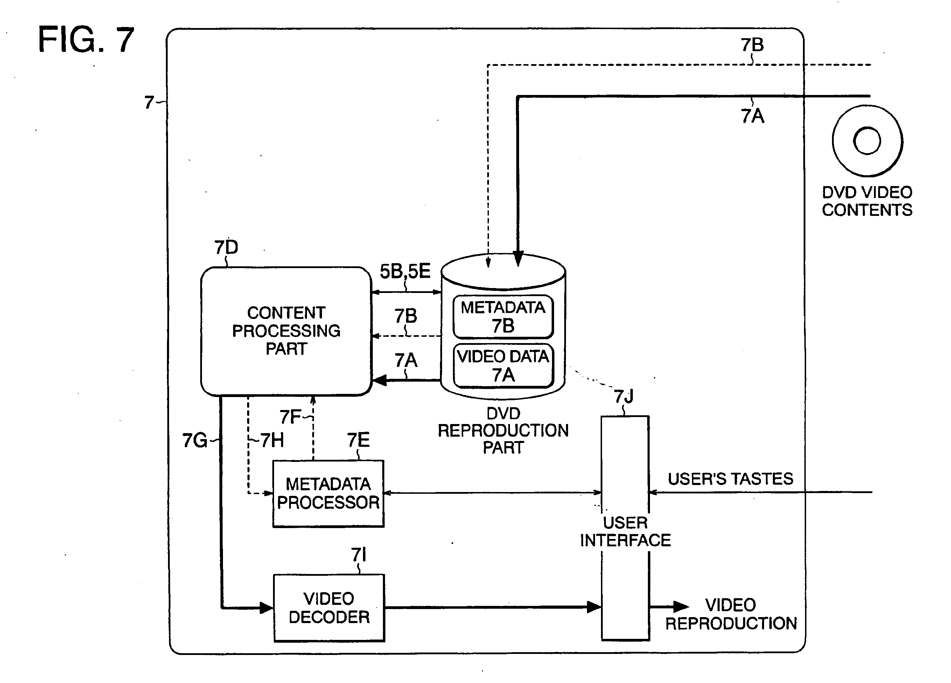

Fig. 6 shows the internal configuration of a storage type broadcasting compliant receiver 7 in this third embodiment. In Fig. 6, 7C designates a content database part, 7D a video encoding part, 7E a metadata processor, 7I a video decoder, and 7J a user interface.

Next, reference will be made to the operation of the storage type broadcasting compliant receiver 7 according to this third embodiment while dividing it into content storage processing and content reproduction processing.

### CONTENT STORAGE PROCESSING

The receiver 7 receives broadcasting video contents comprising video data 7A and metadata 7B from a content delivery server of the first embodiment illustrated in Fig. 1, etc., or a user terminal 6 illustrated in Fig. 5, etc., and accumulates or stores them in the content database part 7C. Here, it is assumed that the metadata 7B conforms to the MPEG-7 compliant metadata (see Fig. 3) described in the first and second embodiments.

### CONTENT REPRODUCTION PROCESSING

The video contents registered in the content database part 7C are displayed on a video monitor (not shown) connected with this receiver 7 according to the view request condition of a user. The user's view request condition may be that the user wants to view through the whole of a video content, or watch a digest that collects only scenes of a specific favor, or it may even be a request that the user wants to view only representative images (key frames) of wanted scenes in a video content. Selection among these dynamic video content presentation forms is achieved by matching between the metadata associated with video data and the request of a user. In addition, the content processing of collecting only scenes of a specific favor or interest, etc., is performed by the content processing part 7D.

The most portions of the internal configuration of the content processing part 7D are similar to the configuration of the content delivery server 5 illustrated in Fig. 4, but in cases where the video monitor of a display system is not connected to the content processing part 7D through a network, the content delivery part 5F is unnecessary. However, it is necessary to read the interaction of the content delivery server 5 with the content database 4 in a different way, so that it is replaced by an internal interaction thereof with the content database part 7C.

In the content processing part 7D, when request information on the user's tastes, etc., is input from the user to the metadata processor 7E through the user interface 7J, query information 7F is created by the metadata processor 7E and input to the content processing part 7D. The content processing part 7D specifies contents for view candidates in the content database part 7C based on the query information 7E, and outputs them as video data 7G and metadata 7H after processing them into the view forms requested by the query information 7F. The video data 7G is reproduced on a video monitor (not shown) by the video decoder 7I through the user interface 7J, etc., and on the other hand, the metadata 7H can be input to the metadata processor 7E where it is used as materials for requery information. In order to comply with various view forms, the video decoder 7I may be provided with a multi-format decoder compliant with various video formats such as, for example, MPEG-2, MPEG-4, MPEG-2, JPEG, etc.

Although in the above-mentioned explanation, reference has been made to the system with broadcasting video contents as its input as shown in Fig. 6, the broadcasting video contents can be interpreted as video contents recorded in recording mediums such as DVDs, as illustrated in Fig. 7. In this case, the content database part 7C is interpreted as a DVD reproduction part as it is. The DVD reproduction part has a function of interpreting a DVD as a storage medium instead of the local storage medium in the system, and outputting the video contents to be processed based on a request from the content processing part 7D. The configuration of this embodiment other than the above is the same as the configuration or operation of the system illustrated in the above-mentioned Fig. 6.

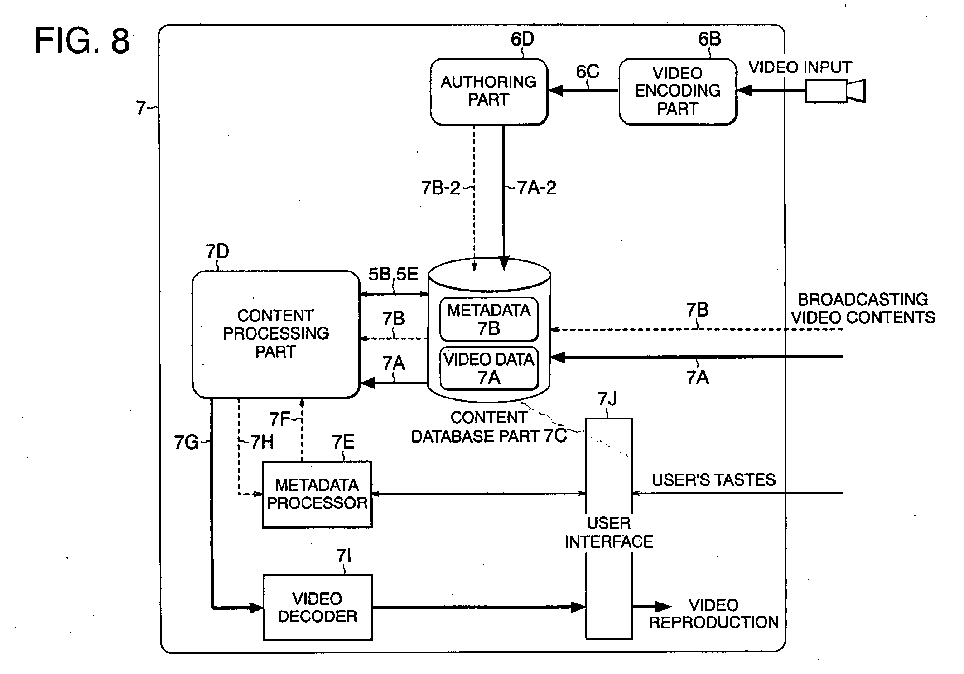

Further, as shown in Fig. 8, the receiver 7 in this fourth embodiment has a function of inputting, from the outside, the broadcasting video contents comprising the video data 7A and the metadata 7B illustrated in Fig. 6 and Fig. 7 or the video contents recorded in a recording medium (note, however, that Fig. 8 shows the case where the broadcasting video contents illustrated in Fig. 6 are input), as well as an authoring function provided by the video encoding part 6B and the authoring part 6D as in the user terminal 6 of the second embodiment shown in Fig. 5, so that the video contents produced by the user himself or herself through the use of the authoring function can be handled similar to broadcasting video contents. In this figure, the video encoding part 6B, the video data 6C and the authoring part 6D are equivalent in functions to the members of the same names in the user terminal 6 of the second embodiment illustrated in Fig. 5, and hence identified by the same symbols.

Thus, according to this third embodiment, assuming the case where metadata in a format common to the MPEG-7 metadata described in the first and second embodiments is given to broadcasting video contents, the broadcasting video contents are stored in the receiver 7, so that the video contents wanted by a user can be presented from among the broadcasting video contents thus stored in the receiver 7 in a quick and adequate manner according to various reproduction conditions. As a result, a system can be achieved which is capable of presenting the video contents for example stored in a receiver 7 in a home in a flexible manner in accordance with a variety of user's view conditions such as indoor or outdoor, etc.

Furthermore, the above-mentioned system can be constructed into a system which supports IP protocol groups (RTP/UDP/IP, TCP/IP, RTSP, etc.) for Internet connection and video delivery, by reading "the video contents for Internet delivery" for "the broadcasting video contents comprising the video data 7A and the metadata 7B".

Further, by the provision of the function of the content delivery part 6H in the user terminal 6 of the second embodiment illustrated in Fig. 5, it is possible to achieve the function of delivering videos or images to another terminal with an IP connection indoor or outdoor. With such a system, it is possible to construct a system in which users can view, at any time and in any place, the video contents stored in a database while adapting them to dynamically varying view conditions such as, for instance, the type of terminals, place, time, tastes for view forms, etc.

### EFFECTS OF THE INVENTION

As described in the foregoing, according to the present invention, when video contents comprising video data and metadata related to the video data are sent, one or more video contents for presentation candidates are extracted based on a request condition concerning the presentation forms of the video contents, the extracted video contents are processed into video contents in the forms to be presented, based on the above-mentioned request condition concerning the presentation forms of the video contents and the metadata of the above-mentioned extracted video contents, so that the processed video contents can be sent out according to a prescribed protocol. As a result, it is possible to present video contents on a platform having various video reproduction environments mixed with one another in a quick and adequate manner based on the request condition at the side of viewing the video contents. In particular, it is possible to process the video contents dynamically in compliance with a view request by means of a mechanism of managing the video contents in metadata pairs corresponding to video data.

In addition, in the present invention, the analysis processing of the video data is carried out to create metadata related to the video data, and video contents comprising the video data and the thus created metadata related to the video data are stored. Accordingly, it is possible to present the video contents wanted by the user from among the broadcasting video contents thus stored in a quick and proper or accurate manner according to various reproduction conditions, as a consequence of which there can be provided a system capable of presenting the video contents for example stored in a receiver 7 in a house in a flexible manner in accordance with a variety of user's view conditions such as in house or outdoor, etc. On the other hand, by further providing a function of delivering the video data, it is possible to achieve flexible video content exchanges between a plurality of user terminals possessing video contents without depending upon a conventional client-server model.

### INDUSTRIAL APPLICABILITY

The present invention can be applied to a system which collectively manages video contents so as to present desired videos or images from among a huge amount of video contents in a quick and accurate manner on a platform with various reproduction environments mixed with one another. In particular, the present invention is applicable to a video content sending device and method, which are necessary for a system construction technology related to the management, operation and processing of digital video information, and it is also applicable to a video content storage device, a video content reproduction device and method, a metadata creation device, and a video content management and operation method.

## Claims

1. Video content sending device adapted to receive from a viewer a request containing information specifying a classification of video content the' viewer wishes to see and information as to the form in which the video content is to be presented, said device comprising:
a metadata creation part (3, 6D) adapted to perform analysis processing of video data to create metadata related to said video data so that, when video data constituting video contents is received, signal processing is applied to said received video contents, metadata that describes scene structures of said video contents and a feature quantity concerning a video signal of each individual scene is created, and said video data, which has been subjected to said signal processing, and said created metadata are registered in pairs as video contents in a video content storage device (4, 6A, 7C);
a content extraction part (5A, 6H, 7D) adapted to extract one or more video contents from storage as presentation candidates on the basis of a comparison of the classification information in the viewer request and the metadata of stored video contents;
a content processing part (5D, 6H, 7D) adapted to process the extracted video contents to ensure compliance with the content presentation form specified in the viewer request; and
a sending device (5F) adapted to transmit an extracted and processed video content to the viewer in accordance with a prescribed protocol.

2. Video content sending device as set forth in claim 1, wherein said metadata also includes, at least, a description of outlines of the entire contents of corresponding video data.

3. Video content sending device as set forth in claim 1, wherein
said metadata also includes, at least, a description of outlines of the entire contents of corresponding video data, and a description of media attributes thereof;
said content extraction part (5A, 6H, 7D) extracts one or more video contents for presentation candidates by matching between the request condition concerning a classification of video contents and the metadata describing the outlines of said entire contents; and
said content processing part (5D, 6H, 7D) specifies portions of said video contents to be presented by matching between said request condition concerning forms of video contents and metadata describing said scene structures, and converts the formats of the processed video contents into reproduction media formats specified in the viewer request, by referring to the media formats of said video contents based on the metadata describing said media attributes.

4. Video content sending method adapted to receive from a viewer a request containing information specifying a classification of video content the viewer wishes to see and information as to the form in which the video content is to be presented, said method comprising:
performing analysis processing of video data to create metadata related to said video data so that, when video data constituting video contents is received, signal processing is applied to said received video contents, metadata that describes scene structures of said video contents and a feature quantity concerning a video signal of each individual scene is created, and said video data, which has been subjected to said signal processing, and said created metadata are registered in pairs as video contents;
extracting one or more video contents from storage as presentation candidates on the basis of a comparison of the classification information in the viewer request and the metadata of stored video contents;
processing the extracted video contents to ensure compliance with the content presentation form specified in the viewer request; and
transmitting an extracted and processed video content to the viewer in accordance with a prescribed protocol.

5. A video content reproduction device adapted to request, receive and reproduce video contents comprising video data and metadata related to said video data, comprising:
a video content request part (1G, 6K, 7E) that creates a request containing information specifying a classification of video content a viewer wishes to see and information as to the form in which the video content is to be presented; and
a video decoding and reproducing part (1G, 6M, 71) that receives video contents which are processed into presentation forms according to said request, decodes and reproduces video data of said video contents,
wherein said video content request part (1G, 6K, 7E) re-creates a video content request based on metadata of said received video contents, which metadata at least describes scene structures of said video contents and a feature quantity concerning a video signal of each individual scene.

6. A video content reproduction method adapted to request, receive and reproduce video contents comprising video data and metadata related to said video data, said method comprising:
creating a request containing information specifying a classification of video content a viewer wishes to see and information as to the form in which the video content is to be presented; and
receiving video contents which are processed into presentation forms according to said request, decoding and reproducing video data of said video contents; and
re-creating a video content request based on metadata of said received video contents, which metadata at least describes scene structures of said video contents and a feature quantity concerning a video signal of each individual scene.

## Patentansprüche

1. Videoinhalts-Sendevorrichtung, die ausgebildet ist zum Empfangen einer Anforderung von einem Betrachter, die Informationen, die eine Klassifizierung des Videoinhalts, den der Betrachter zu sehen wünscht, spezifizieren, und Informationen hinsichtlich der Form, in der der Videoinhalt darzustellen ist, enthält, welche Vorrichtung aufweist:
einen Metadaten-Schaffungsteil (3, 6D), der ausgebildet ist zum Durchführen einer Analyseverarbeitung von Videodaten, um auf die Videodaten bezogene Metadaten so zu schaffen, dass, wenn Videodaten, die Videoinhalte bilden, empfangen werden, eine Signalverarbeitung auf die empfangenen Videoinhalte angewendet wird, Metadaten,
die Szenestrukturen der Videoinhalte und eine Merkmalsquantität betreffend ein Videosignal jeder individuellen Szene beschreiben, geschaffen werden, und die Videodaten, die der Signalverarbeitung unterzogen wurden, und die geschaffenen Metadaten in Paaren als Videoinhalte in einer Videoinhalts-Speichervorrichtung (4, 6A, 7C) gespeichert werden;
einen Inhaltsextraktionsteil (5A, 6H, 7D), der ausgebildet ist zum Herausziehen eines oder mehrerer Videoinhalte aus dem Speicher als Darstellungskandidaten auf der Grundlage eines Vergleichs der Klassifizierungsinformationen in der Betrachteranforderung und der Metadaten von gespeicherten Videoinhalten;
einen Inhaltsverarbeitungsteil (5D, 6H, 7D), der ausgebildet ist zum Verarbeiten der herausgezogenen Videoinhalte, um eine Übereinstimmung mit der Inhaltsdarstellungsform, die in der Betrachteranforderung spezifiziert ist, sicherzustellen; und
eine Sendevorrichtung (5F), die ausgebildet ist,
um einen herausgezogenen und verarbeiteten Videoinhalt gemäß einem vorgeschriebenen Protokoll zu dem Betrachter zu übertragen.

2. Videoinhalts-Sendevorrichtung nach Anspruch 1, bei der die Metadaten auch zumindest eine Beschreibung von Überblicken über die gesamten Inhalte von entsprechenden Videodaten enthalten.

3. Videoinhalts-Sendevorrichtung nach Anspruch 1, bei der
die Metadaten auch zumindest eine Beschreibung von Überblicken über die gesamten Inhalte von entsprechenden Videodaten und eine Beschreibung von Medienattributen hiervon enthalten;
der Inhaltsextraktionsteil (5A, 6H, 7D) einen oder mehrere Videoinhalte für Darstellungskandidaten durch Anpassen zwischen der Anforderungsbedingung betreffend eine Klassifizierung von Videoinhalten und den Metadaten, die die Überblicke der gesamten Inhalte beschreiben, herauszieht; und
der Inhaltsverarbeitungsteil (5D, 6H, 7D) Teile der darzustellenden Videoinhalte spezifiziert durch Anpassen zwischen der Anforderungsbedingung betreffend Formen von Videoinhalten und Metadaten, die die Szenestrukturen beschreiben, und die Formate von verarbeiteten Videoinhalten in Wiedergabe-Medienformate, die in der Betrachteranforderung spezifiziert sind, umwandelt durch Bezugnahme auf die Medienformate der Videoinhalte auf der Grundlage der die Medienattribute beschreibenden Metadaten.

4. Videoinhalts-Sendeverfahren, das ausgebildet ist zum Empfangen einer Anforderung von einem Betrachter, die Informationen, die eine Klassifizierung des Videoinhalts, den der Betrachter zu sehen wünscht, spezifizieren, und Informationen hinsichtlich der Form, in der der Videoinhalt darzustellen ist, enthält, welches Verfahren aufweist:
Durchführen einer Analyseverarbeitung von Videodaten, um auf die Videodaten bezogene Metadaten zu schaffen, derart, dass, wenn Videoinhalte bildende Videodaten empfangen werden, eine Signalverarbeitung bei den empfangenen Videoinhalten angewendet wird, Metadaten, die Szenestrukturen der Videoinhalte und eine Merkmalsquantität betreffend ein Videosignal jeder individuellen Szene beschreiben, geschaffen werden, und
die Videodaten, die der Signalverarbeitung unterzogen wurden, und die geschaffenen Metadaten in Paaren als Videoinhalte registriert werden;
Herausziehen eines oder mehrerer Videoinhalte aus dem Speicher als Darstellungskandidaten auf der Grundlage eines Vergleichs der Klassifizierungsinformationen in der Betrachteranforderung und der Metadaten von gespeicherten Videoinhalten;
Verarbeiten der herausgezogenen Videoinhalte, um eine Übereinstimmung mit der der Inhaltsdarstellungsform, die in der Betrachteranforderung spezifiziert ist, sicherzustellen; und
Übertragen eines herausgezogenen und verarbeiteten Videoinhalts zu dem Betrachter gemäß einem vorgeschriebenen Protokoll.

5. Videoinhalts-Wiedergabevorrichtung, die ausgebildet ist zum Anfordern, Empfangen und Wiedergeben von Videoinhalten, die Videodaten und auf die Videodaten bezogene Metadaten aufweisen, welche aufweist:
einen Videoinhalts-Anforderungsteil (1G, 6K, 7E), der eine Anforderung enthaltend Informationen, die eine Klassifizierung des Videoinhalts, den ein Betrachter zu sehen wünscht, und Informationen hinsichtlich der Form, in der der Videoinhalt darzustellen ist, schafft; und
einen Videodecodier- und -wiedergabeteil (1G, 6M, 71), der Videoinhalte empfängt, die in Darstellungsformen gemäß der Anforderung verarbeitet sind, decodiert und Videodaten der Videoinhalte wiedergibt,
wobei der Videoinhalts-Anforderungsteil (1G, 6K, 7E) eine Videoinhaltsanforderung auf der Grundlage von Metadaten der empfangenen Videoinhalte neu schafft, welche Metadaten zumindest Szenestrukturen der Videoinhalte und eine Merkmalsquantität betreffend ein Videosignal jeder individuellen Szene beschreiben.

6. Videoinhalts-Wiedergabeverfahren, das ausgebildet ist zum Anfordern, Empfangen und Wiedergeben von Videoinhalten, die Videodaten und auf die Videodaten bezogene Metadaten aufweisen, welches Verfahren aufweist:
Schaffen einer Anforderung enthaltend Informationen, die eine Klassifizierung von Videoinhalt, den ein Betrachter zu sehen wünscht, spezifizieren, und Informationen hinsichtlich der Form, in der der Videoinhalt darzustellen ist; und Empfangen von Videoinhalten, die in Darstellungsformen gemäß der Anforderung verarbeitet sind, Decodieren und Wiedergeben von Videodaten der Videoinhalte; und
Neuschaffen einer Videoinhaltsanforderung auf der Grundlage von Metadaten der empfangenen Videoinhalte, welche Metadaten zumindest Szenestrukturen der Videoinhalte und eine Merkmalsquantität betreffend ein Videosignal jeder individuellen Szene beschreiben.

## Revendications

1. Dispositif d'envoi de contenu vidéo adapté pour recevoir en provenance d'un téléspectateur une demande contenant des informations spécifiant une classification d'un contenu vidéo que le téléspectateur souhaite voir et des informations concernant la forme sous laquelle le contenu vidéo doit être présenté, ledit dispositif comprenant :
une partie création de métadonnées (3, 6D) adaptée de manière à exécuter un traitement d'analyse des données vidéo de manière à créer des métadonnées associées auxdites données vidéo de telle sorte que, lorsque des données vidéo qui constituent des contenus vidéo sont reçues, un traitement du signal soit appliqué auxdits contenus vidéo reçus, des métadonnées qui décrivent des structures de scène desdits contenus vidéo et une quantité de caractéristique concernant un signal vidéo de chacune des scènes soient créées, et que lesdites données vidéo qui ont été soumises audit traitement du signal et lesdites métadonnées créées soient enregistrées par paires en tant que contenus vidéo dans un dispositif de stockage de contenu vidéo (4, 6A, 7C) ;
une partie d'extraction de contenu (5A, 6H, 7D) adaptée de manière à extraire un ou plusieurs contenus vidéo à partir d'un stockage en tant que candidats de présentation sur la base d'une comparaison des informations de classification dans la demande du téléspectateur et des métadonnées des contenus vidéo stockés ;
une partie traitement de contenu (5D, 6H, 7D) adaptée de manière à traiter les contenus vidéo extraits de façon à garantir une conformité vis-à-vis de la forme de présentation de contenu spécifiée dans la demande du téléspectateur ; et
un dispositif d'envoi (5F) adapté de manière à transmettre au téléspectateur un contenu vidéo extrait et traité selon un protocole prescrit.

2. Dispositif d'envoi de contenu vidéo selon la revendication 1, dans lequel lesdites métadonnées comprennent en outre, au moins, une description des grandes lignes de l'ensemble des contenus des données vidéo correspondantes.

3. Dispositif d'envoi de contenu vidéo selon la revendication 1, où :
lesdites métadonnées comprennent en outre, au moins, une description des grandes lignes de l'ensemble des contenus des données vidéo correspondantes, et une description de leurs attributs multimédias ;
ladite partie extraction de contenu (5A, 6H, 7D) extrait un ou plusieurs contenus vidéo pour des candidats de présentation en établissant une correspondance entre la condition de demande concernant une classification de contenus vidéo et les métadonnées qui décrivent les grandes lignes dudit ensemble des contenus ; et
ladite partie traitement de contenu (5D, 6H, 7D) spécifie des parties desdits contenus vidéo à présenter en établissant une correspondance entre ladite condition de demande concernant les formes des contenus vidéo et les métadonnées qui décrivent lesdites structures de scène, et convertit les formats des contenus vidéo traités en formats multimédias de reproduction spécifiés dans la demande du téléspectateur, en se référant aux formats multimédias desdits contenus vidéo sur la base des métadonnées décrivant lesdits attributs multimédias.

4. Procédé d'envoi de contenu vidéo adapté pour recevoir en provenance d'un téléspectateur une demande qui contient des informations spécifiant une classification d'un contenu vidéo que le téléspectateur souhaite voir et des informations concernant la forme sous laquelle le contenu vidéo doit être présenté, ledit procédé comprenant les étapes consistant à :
exécuter un traitement d'analyse des données vidéo de manière à créer des métadonnées associées auxdites données vidéo de telle sorte que, lorsque des données vidéo qui constituent des contenus vidéo sont reçues, un traitement du signal soit appliqué auxdits contenus vidéo reçus, des métadonnées qui décrivent des structures de scène desdits contenus vidéo et une quantité de caractéristique concernant un signal vidéo de chacune des scènes soient créées, et que lesdites données vidéo qui ont été soumises audit traitement du signal et lesdites métadonnées créées soient enregistrées par-paires en tant que contenus vidéo ;
extraire un ou plusieurs contenus vidéo à partir d'un stockage en tant que candidats de présentation sur la base d'une comparaison des informations de classification dans la demande du téléspectateur et des métadonnées des contenus vidéo stockés ;
traiter les contenus vidéo extraits de façon à garantir une conformité vis-à-vis de la forme de présentation de contenu spécifiée dans la demande du téléspectateur ; et
transmettre au téléspectateur un contenu vidéo extrait et traité selon un protocole prescrit.

5. Dispositif de reproduction de contenu vidéo adapté de manière à demander, recevoir et reproduire des contenus vidéo qui comprennent des données vidéo et des métadonnées qui se rapportent auxdites données vidéo, comprenant :
une partie demande de contenu vidéo (1G, 6K, 7E) qui crée une demande contenant des informations qui spécifient une classification de contenu vidéo que le téléspectateur souhaite voir et des informations concernant la forme sous laquelle le contenu vidéo doit être présenté ; et
une partie décodage et reproduction vidéo (1G, 6M, 71) qui reçoit des contenus vidéo qui sont traités en des formes de présentation selon ladite demande, décode et reproduit les données vidéo desdits contenus vidéo ;
dans lequel ladite partie demande de contenu vidéo (1 G, 6K, 7E) recrée une demande de contenu vidéo sur la base des métadonnées desdits contenus vidéo reçus, lesquelles métadonnées décrivent au moins des structures de scène desdits contenus vidéo et une quantité de caractéristique concernant un signal vidéo de chaque scène individuelle.

6. Procédé de reproduction de contenu vidéo adapté de manière à demander, recevoir et reproduire des contenus vidéo qui comprennent des données vidéo et des métadonnées qui se rapportent auxdites données vidéo, ledit procédé comprenant les étapes consistant à :
créer une demande contenant des informations qui spécifient une classification de contenu vidéo que le téléspectateur souhaite voir et des informations concernant la forme sous laquelle le contenu vidéo doit être présenté ; et
recevoir les contenus vidéo qui sont traités en des formes de présentation selon ladite demande, décoder et reproduire les données vidéo desdits contenus vidéo ; et
recréer une demande de contenu vidéo sur la base des métadonnées desdits contenus vidéo reçus, lesquelles métadonnées décrivent au moins des structures de scène desdits contenus vidéo et une quantité de caractéristique concernant un signal vidéo de chaque scène individuelle.
